# EUROPÄISCHE PATENTSCHRIFT

(11) **EP 1 647 193 B1**
(45) Veröffentlichungstag und Bekanntmachung des Hinweises auf die Patenterteilung: **11.02.2009**
(21) Anmeldenummer: 04024662.1
(22) Anmeldetag: 15.10.2004
(51) Int. Cl.: A22C 11/02

(54) **Vorrichtung und Verfahren zum Befüllen einer Hülle mit pastösem Füllgut**
Apparatus and method for filling a casing with pasty material
Appareil et procédé de remplissage d'un boyau avec un produit pâteux

(43) Veröffentlichungstag der Anmeldung: 19.04.2006
(73) Patentinhaber: Albert Handtmann Maschinenfabrik GmbH & Co. KG, 88400 Biberach (DE)
(72) Erfinder: Schrader, Wolfgang, 88400 Biberach (DE); Miller, Lothar, 88483 Burgrieden-Rot (DE); Herzig, Volker, 88525 Dürmentigen (DE)
(74) Vertreter: Grünecker, Kinkeldey, Stockmair & Schwanhäusser Anwaltssozietät

(56) Entgegenhaltungen:
- EP-A- 1 074 180
- DE-A1- 3 600 818
- DE-A1- 10 015 893
- DE-A1- 19 706 076
- US-A1- 2003 224 712

## Beschreibung

Die Erfindung betrifft eine Vorrichtung bzw. ein Verfahren zum Befüllen einer Hülle mit pastösem Füllgut gemäß den Oberbegriffen der Patentansprüche 1 und 11.

Bei der Wurstproduktion wird eine schlauchförmige Wursthülle mit Wurstmasse befüllt, wobei die Wurstmasse aus einem Füllrohr in die Wursthülle ausgestoßen wird. Ein Vorrat an Wursthülle wird über das Füllrohr oder eine darauf angeordnete Hülse gezogen und gerafft, (als so genannte Darmraupe), wobei die in Falten gerafften Hülle beim Füllen auseinandergezogen werden, so dass anschließend die Hülle glatt und eben das Füllgut umgibt. Insbesondere bei der Verwendung von Naturdärmen treten im Bereich des Füllrohrendes so genannte Hüllenplatzer bzw. Darmplatzer auf, die eine Unterbrechung der Wurstproduktion erzwingen. Derartige Wursthüllenplatzer müssen vom Bediener visuell oder durch Fühlen erkannt werden. Der Bediener muss dann möglichst schnell die Maschine stoppen. Dies bedingt, dass der Bediener ständig den Produktionsprozess beobachten muss. Wenn ein Darmplatzer spät erkannt wird, verschmutzt die Maschine stark und muss wieder zeitaufwändig gereinigt werden. Auch zur Erkennung des Wursthüllenendes muss der Bediener den Vorgang ständig überwachen. Bei der Verwendung von Naturdärmen werden überlappende Darmstücke auf dem Füllrohr angeordnet, die bei der Befüllung auseinandergezogen werden können, so dass ein exaktes Überwachen des Naturdarmendes notwendig ist. Insbesondere sollte das Darmende rechtzeitig erkannt werden, bevor es über das offene Ende des Füllrohrs abgezogen wird.

Es wurden bereits unterschiedliche Lösungen vorgeschlagen, bei denen Darmplatzer mit mechanischen Teilen erfasst werden können. Der Zustand dieser mechanischen Taster wird mit Sensoren und einer elektronischen Steuerung ausgewertet. Diese Systeme arbeiten jedoch sehr unzuverlässig und sind kompliziert und teuer.

In der Druckschrift DE 10015893 wurde bereits eine Lösung mit Abstandssensor und Frequenzanalyse vorgeschlagen. Auch dieses System ist relativ kompliziert und kostenintensiv. Bislang konnte kein vorgeschlagenes Verfahren Darmplatzer bzw. Darmenden einfach und zuverlässig ermitteln. Insbesondere kann keines der bekannten Verfahren den gesamten Anwendungsbereich zuverlässig abdecken. Insbesondere bei Änderung der Produktionsparameter, wie etwa Füllgeschwindigkeit, Durchmesser, Darmarten, sind umfangreiche Anpassungsarbeiten (z.B. durch Teachin) nötig.

Aus der DE 197 06 076 A1 ist bereits bekannt, Fehler einer Objekts auf einem Standbild zu ermitteln.

Hiervon ausgehend liegt der vorliegenden Erfindung die Aufgabe zugrunde, ein Verfahren und eine Vorrichtung bereitzustellen, die es auf einfache und zuverlässige Art und Weise ermöglichen, Hüllenplatzer und/oder Hüllenenden beim Befüllen einer Hülle mit pastösem Gut festzustellen.

Erfindungsgemäß wird diese Aufgabe durch die Merkmale der Patentansprüche 1 und 11 gelöst.

Dadurch dass die Sensoreinrichtung einen optischen Sensor umfasst, können in zeitlicher Abfolge Bilder der Hülle aufgezeichnet werden. Eine Auswerteeinheit kann dann die Bilder dahingehend auswerten, ob ein Wursthüllenplatzer und/oder ein Wursthüllenende vorliegt und gegebenenfalls ein entsprechendes Fehlersignal ausgeben. Gemäß der vorliegenden Erfindung ist als Bild hier nicht lediglich ein einzelner Punkt zu verstehen, sondern eine Anordnung von mehreren Bildpunkten, die eine von dem Sensor erfasste Fläche der Hülle in einem bestimmten Messbereich darstellen. Die Auswerteeinheit kann z.B. die Änderung aufeinanderfolgender Bilder erfassen. Das Ausmaß der Änderung des aufgezeichneten Bildes des bestimmten Messbereichs ist ein Maß für das Vorhandensein von Wursthüllenplatzern und/oder Hüllenenden. Gemäß der vorliegenden Erfindung kann somit auf einfache Art und Weise zuverlässig erkannt werden, ob ein Wursthüllenplatzer und/oder ein Wursthüllenende vorliegt.

Gemäß der Erfindung ist der Sensor ein Bewegungssensor und die Auswerteeinheit gibt das Fehlersignal dann aus, wenn die aufgezeichneten Bilder anzeigen, dass sich die Hülle nicht mehr in Ausstoßrichtung bewegt und/oder sich nicht mehr in eine Richtung senkrecht zur Ausstoßrichtung bewegt, oder die Bewegung pro Zeit der Hülle in Ausstoßrichtung oder senkrecht zur Ausstoßrichtung unter einen bestimmten Schwellwert fällt. In vorteilhafter Anwendung wird also erfasst, ob sich Hüllenmaterial in Ausstoßrichtung bewegt. Wenn diese Bewegung pro Zeit (z.B. zwischen zwei Messungen) nicht in erwartetem Maß stattfindet, kann daraus auf eine geplatzte oder nicht mehr vorhandene Hülle geschlossen werden. Es kann dann ein Fehlersignal erzeugt werden, wenn keine ausreichende Bewegung in Ausstoßrichtung erkannt wird, während der Ausstoßprozess stattfindet. Die Komponente quer zur Ausstoßrichtung gibt Information über die Sicherheit der Mitnahme der Wursthülle auf dem Füllrohr. Findet keine oder nur eine geringe Mitnahme der Wursthülle quer zur Ausstoßrichtung statt, so kann ebenfalls ein Fehlersignal ausgegeben werden.

Gemäß einer bevorzugten Ausführungsform umfasst der optische Sensor eine Anordnung von lichtempfindlichen Zellen, die zeitabhängig die Intensität des von der Hülle reflektierten Lichts erfassen. Eine Anordnung derartiger lichtempfindlicher Zellen ist kostengünstig und einfach zu realisieren.

Der optische Sensor kann dann derart beschaffen sein, dass er zu den von den lichtempfindlichen Zellen erfassten Intensitäten proportionale Messsignale an die Auswerteeinheit leitet, die wiederum eine Verschiebung der zweidimensionalen Koordinaten der entsprechenden Messsignalen bei zeitlich aufeinanderfolgenden Bildern erfasst, wobei die Verschiebung ein Maß für die Bewegung der Hülle ist. Das bedeutet, dass über die Verfolgung der relativen Verschiebung des Bildes auf die Bewegung und Geschwindigkeit der Hülle geschlossen werden kann. Die Auswerteeinheit kann dann ein Fehlersignal ausgeben, wenn die Verschiebung der Messsignale in Ausstoßrichtung oder senkrecht zur Ausstoßrichtung unterhalb eines vorbestimmten Schwellwertes liegt oder keine Verschiebung vorliegt.

Die Vorrichtung weist vorzugsweise weiter eine Lichtquelle auf, die derart angeordnet ist, dass zumindest die von dem Sensor erfasste Fläche der Hülle gleichmäßig beleuchtet wird. Aufgrund der gleichmäßigen Beleuchtung kommt es zu gut erkennbaren charakteristischen Helligkeitsunterschieden auf der Oberfläche der Hülle, die dann als Bild von dem optischen Sensor aufgezeichnet werden können. Eine gleichmäßige Beleuchtung gewährleistet, dass der Sensor korrekte Daten liefern kann und dass der Sensor die Helligkeitsunterschiede auf der Oberfläche sowohl räumlich als auch in der Intensität auflösen kann. Vorzugsweise emittiert die Lichtquelle diffuses Licht.

Eine besondere Schwierigkeit besteht darin, dass das Füllrohr mit der Wursthülle zylindrisch ist und damit die reflektierende Fläche nicht eben, sondern gekrümmt ist. Dadurch entstehen streifenförmige, ortsfeste Reflexionen auf dem Rohr, die die Bewegungserkennung erschweren. Um dem entgegen zu wirken, ist die Lichtquelle vorzugsweise ringförmig oder als Ringsegment ausgebildet. Dabei reicht es aus, mit einem Ringsegment die vom Sensor erfasste Fläche auszuleuchten.

Der optische Sensor ist vorzugsweise derart angeordnet, dass die Hülle auf dem Füllrohr in Ausstoßrichtung vor einer Darmbremse und/oder nach der Darmbremse optisch abgetastet wird, und/oder die gefüllte Wursthülle optisch abgetastet wird.

Vorteilhafterweise umfasst die Vorrichtung eine Systemsteuerung, die den Füllvorgang automatisch stoppt, wenn sie das Fehlersignal von der Auswerteeinheit erhält. Dadurch, dass die Vorrichtung bei einem Wursthüllenplatzer oder dem Wursthüllenende sofort stoppt, wird eine Verschmutzung der Vorrichtung verhindert.

Zwischen dem Füllrohr, auf dem die Hülle aufgezogen ist, und dem optischen Sensor kann eine Linsenoptik vorgesehen sein, die die abgetastete Oberfläche auf den Sensor fokussiert.

Bei dem erfindungsgemäßen Verfahren ist es weiter möglich, dass bei dem aufgezeichneten Bild bestimmt wird, ob das aufgezeichnete Bildmuster einem gespeicherten Bildmuster entspricht. Somit kann eine Aussage über die Art der abgetasteten Oberfläche gemacht werden und insbesondere bestimmt werden, ob und welches Hüllenmaterial aufgezogen ist.

Weiter ist es möglich, dass der optische Sensor zu den erfassten Intensitäten proportionale Messsignale an die Auswerteeinheit leitet, die wiederum für zeitlich wiederkehrende Messwerte ein Frequenzspektrum auswertet. Über dieses Frequenzspektrum kann beispielsweise eine Aussage über die Raffung der Hülle oder die Bewegung der Hülle in Ausstoßrichtung gemacht werden.

Die vorliegende Erfindung wird nachfolgend unter Bezugnahme der folgenden Zeichnungen näher erläutert:
- Fig. 1: zeigt schematisch eine Schnittdarstellung des prinzipiellen Aufbaus der erfindungsgemäßen Vorrichtung.
- Fig. 2: zeigt schematisch den Schnitt des Aufbaus der vorliegenden Erfindung mit unterschiedlichen Sensorpositionen.
- Fig. 3: zeigt einen Graphen, der die gemessene Abzugsbewegung der Hülle in Abhängigkeit der Zeit darstellt.
- Fig. 4a: zeigt ein aufgezeichnetes Bild der Hülle im Messbereich zum Zeitpunkt 1.
- Fig. 4b: zeigt ein Bild des gleichen Messbereichs zu einem Zeitpunkt 2.
- Fig. 4c: zeigt die Auswertung der Verschiebung der Bildmuster der Fig. 4a, 4b.
- Fig. 5a: zeigt schematisch die Sensoreinrichtung mit ebenem Messbereich.
- Fig. 5b: zeigt schematisch die Sensoreinrichtung mit gekrümmtem Messbereich.

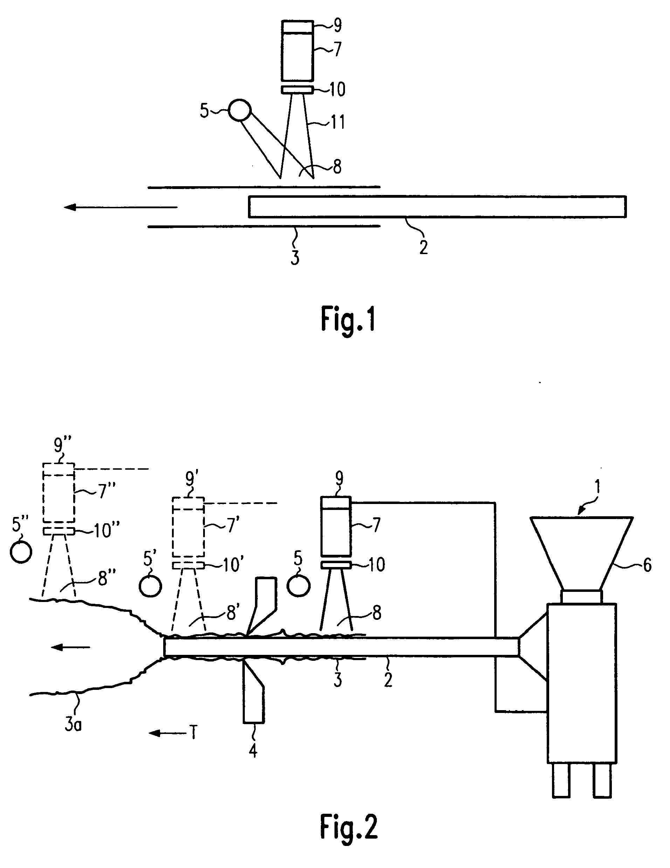

Die erfindungsgemäße Vorrichtung umfasst, wie insbesondere aus Fig. 2 hervorgeht, eine Fülleinheit 1 mit entsprechendem Trichter 6 und einem Füllrohr 2 sowie einer Darmbremse 7 zum Befüllen einer Wursthülle 3 mit pastösem Gut, z. B. einer Wurst mit Wurstbrät. Das Füllrohr 2 ist über einen nicht näher dargestellten Füllrohrdrehantrieb, der an einem Maschinengestell befestigt ist, um seine Längsachse drehbar gelagert. Das Füllrohr 2 weist in bekannter Weise eine Darmbremse 4 mit einem entsprechenden Bremsring auf, durch die die auf dem Füllrohr 2 geraffte Wursthülle 3 durch den Füllgutausstoß abgezogen wird. Die Darmbremse 4 bzw. deren Bremsring kann über ein Bremsringgetriebe synchronisiert mit dem Füllrohr 2 drehend angetrieben werden. Das Bremsringgetriebe kann so verschwenkt werden (nicht dargestellt), dass das Ende des Füllrohrs 2 zum Aufziehen einer neuen Wursthülle 3 oder zum Reinigen freigelegt wird. Altemativ kann auch bei feststehendem Bremsringgetriebe das Füllrohr aus der Öffnung des Bremsringgetriebes herausgefahren und seitlich verschwenkt werden.

Im Betrieb wird pastöses Füllgut in bekannter Weise in Transportrichtung T durch das Füllrohr 2 in die Wursthülle gedrückt. Der gefüllte Wurststrang 3a wird dann über eine nicht gezeigte Transporteinrichtung, wie beispielsweise einer Längeneinheit mit Transportbändem in Ausstoßrichtung T mit einer bestimmten Geschwindigkeit vom Füllrohr 2 abgezogen.

Wie aus Fig. 1 hervorgeht, weist die Vorrichtung einen optischen Sensor 7 auf, der vorzugsweise senkrecht zu der beweglichen Hülle 3 angeordnet ist und eine bestimmte Fläche im Messbereich 8 erfasst. Der Sensor 7 kann z. B. eine quadratische Anordnung von lichtempfindlichen Zellen mit nachgeschalteter Auswerteeinheit 9 umfassen. Die lichtempfindlichen Zellen können beispielsweise aus Fototransistoren gebildet sein. Die lichtempfindlichen Zellen erfassen die Intensität des von der Hülle 3 im Messbereich 8 emittierten Lichts, wie durch den Strahlengang 11 dargestellt ist. Der Abstand zwischen Sensor 7 und Füllrohr 2 liegt vorzugsweise in einem Bereich von 5 cm bis 30 cm.

Weiter umfasst die erfindungsgemäße Vorrichtung eine Lichtquelle 5, die zumindest die vom Sensor 7 erfasste Fläche 8 der Hülle 3 gleichmäßig beleuchtet. Vorzugsweise sollte die Beleuchtung nicht punktförmig, sondern diffus sein. Die Beleuchtung kann beispielsweise durch normales Licht in einem Wellenlängenbereich von 380 nm bis 780 nm oder durch Licht im Infrarotbereich von 780 nm bis 1000 nm erfolgen, oder aber auch durch Laserstrahlen, so dass mindestens die von dem Bildsensor erfasste Fläche gleichmäßig beleuchtet wird.

Zwischen Füllrohr und Sensor 7 befindet sich in bevorzugter Weise eine Linsenoptik 10, die das von dem Messbereich 8 reflektierte Licht auf den Sensor 7 fokussiert.

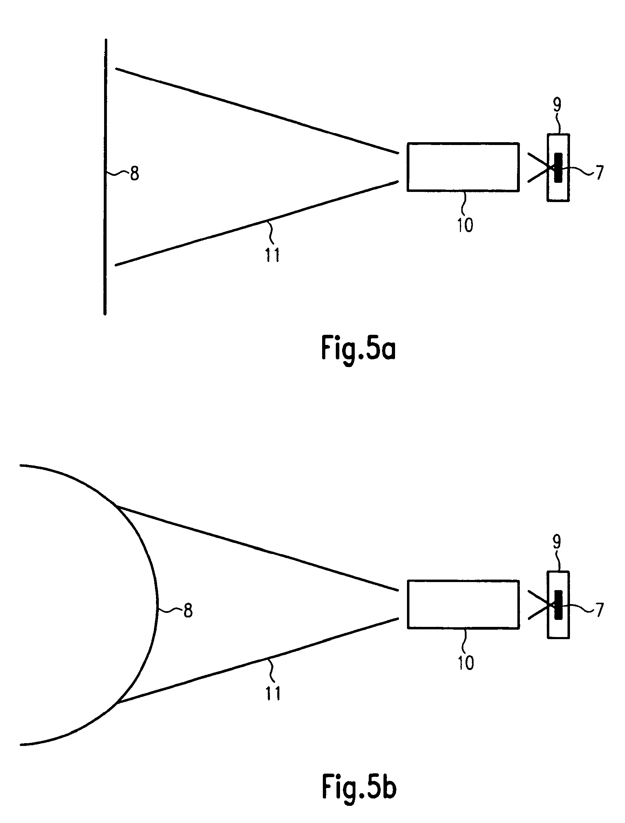

Fig. 5a zeigt die ideale Anordnung für die optische Abtastung eines Messbereichs 8 einer Oberfläche, die eben ist. Die in Fig. 5a nicht dargestellte Lichtquelle beleuchtet den ebenen Messbereich 8, der wiederum, wie der Strahlengang 11 zeigt, Licht zur Linsenoptik 10 hin reflektiert, wobei die Linsenoptik 10 das reflektierte Licht 11 auf den Bildsensor 7 projiziert. Eine besondere Schwierigkeit besteht jedoch darin, wie in Fig. 5b gezeigt ist, dass das Füllrohr 2 mit der Wursthülle 3 zylindrisch ausgebildet ist und damit die reflektierende Fläche, d.h. der Messbereich 8 nicht wie in Fig. 5a eben ist. Dadurch entstehen streifenförmige ortsfeste Reflexionen auf dem Füllrohr 2, die eine Erkennung eines bestimmten Bildmuster erschweren. Um dem entgegenzuwirken, kann die Lichtquelle 5 ringförmig oder als Ringsegment ausgebildet sein. Dabei reicht es aus, dass das Ringsegment die vom Sensor 7 erfasste Fläche des Messbereichs 8 ausleuchtet.

Die gekrümmte Oberfläche wird vom Sensor 7 verzerrt erfasst. Dies muss entweder durch eine geeignete Optik 10 oder von der Auswerteeinheit 9, die nachfolgend näher beschrieben wird, kompensiert werden.

Wie aus den Fig. 1, 2 und 5 hervorgeht, umfasst die Vorrichtung weiter eine Auswerteeinheit 9, die die Bilder 12a, b, die von dem optischen Sensor 7 aufgezeichnet werden, auswertet. Die Auswerteeinheit 9 kann beispielsweise ein Mikroprozessor sein, der eine fest verdrahtete oder programmierbare Logik aufweist. Die Auswerteeinheit 9 erhält Messsignale, die zu den von den lichtempfindlichen Zellen erfassten Intensitäten des reflektierten Lichts 11 proportional sind und kann ein den Messbereich 8 entsprechendes Bildmuster ablegen und die Verschiebung des Bildmusters bei aufeinanderfolgenden Bildaufzeichnungen verfolgen. Es ist auch möglich, dass die Auswerteeinheit 9 ein aufgezeichnetes Bildmuster mit einem vorab gespeicherten Bildmuster vergleicht, um eine Aussage über die Art der abgetasteten Oberfläche abzuleiten. Die Auswerteeinheit 9 kann ein Fehlersignal ausgeben, wenn ein Wursthüllenplatzer und/oder ein Wursthüllenende vorliegt und ist daher mit einer Steuerung der Vorrichtung 1 verbunden, die die Funktionen der Vorrichtung 1 steuert, und die den Füllvorgang stoppt, wenn sie ein Fehlersignal von der Auswerteeinheit 9 erhält. In den Figuren ist die Auswerteeinheit 9 als Einheit mit dem optischen Sensor 7 dargestellt. Die Auswerteeinheit 9 kann jedoch auch getrennt von dem optischen Sensor 7 angeordnet sein.

Fig. 2 zeigt die möglichen Anordnungen des optischen Sensors 7. Der optische Sensor 7 kann z.B. in Ausstoßrichtung T vor der Darmbremse 4 angeordnet sein. Eine Anordnung in diesem Bereich erlaubt frühzeitig das Erkennen des Darmendes. Alternativ dazu kann der optische Sensor 7' auch in Ausstoßrichtung T hinter der Darmbremse 4 angeordnet sein. Es können jedoch auch beide Sensoren 7 und 7' gleichzeitig vor und nach der Darmbremse 4 vorgesehen sein, was die Messsicherheit erhöhen kann. Auch möglich ist es, den Sensor 7" derart anzuordnen, dass er die bereits gefüllte Wursthülle 3a optisch abtastet.

Bei dem erfindungsgemäßen Verfahren wird, wie zuvor beschrieben, Füllgut aus dem Füllrohr 2 der Hülle 3 ausgestoßen. Die auf dem Füllrohr 2 geraffte Hülle 3 bewegt sich dabei in Ausstoßrichtung T durch den Messbereich 8 unterhalb des optischen Sensors 7 hindurch. Weiter kann, wie zuvor beschrieben, sich die Hülle 3 zusammen mit dem Füllrohr 2 um die Längsachse des Füllrohrs mitdrehen. Der Messbereich 8 wird von der Lichtquelle 5 gleichmäßig ausgeleuchtet. Die Hülle 3 reflektiert im Messbereich 8 das Licht der Lichtquelle 5. Aufgrund der Struktur und der Beschaffenheit der Oberfläche ergeben sich charakteristische Helligkeitsunterschiede, die von dem Sensor 7 erfasst werden können. Vorzugsweise wird die Hülle 3 unter einem flachen Winkel beleuchtet, damit die Unregelmäßigkeiten der Oberfläche durch Schattenwurf besonders deutlich messbar werden.

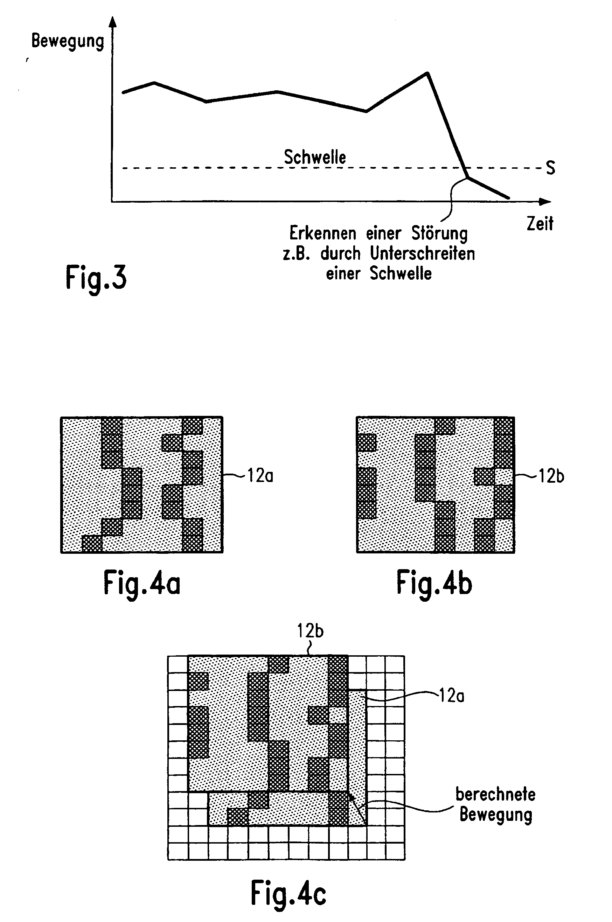

Das reflektierte Licht 11 passiert eine Linsenoptik 10 und wird auf den Sensor 7 projiziert. Das reflektierte Licht trifft dann auf die Sensoroberfläche, hier die in X-, Y-Richtung quadratisch angeordneten nicht dargestellten lichtempfindlichen Zellen. Die lichtempfindlichen Zellen wandeln dann das empfangene von der Hülle 3 im Messbereich 8 reflektierte Licht 11 in entsprechende Messsignale um, wobei das Messsignal der Intensität des reflektierten Lichts entspricht. Die Messsignale der lichtempfindlichen Zellen können von der Auswerteeinheit 9 digitalisiert werden und als entsprechendes Bildmuster 12a, das zu einem Zeitpunkt t₁ aufgezeichnet wurde, gespeichert werden, wie aus Fig. 4a deutlich wird. Die Fig. 4a zeigt ein Bild mit 8 x 8 Bildpunkten, deren Intensität von einer Anordnung von 8 x 8 Lichtzellen aufgezeichnet wurde. Dabei entsprechen die unterschiedlichen Grauwerte den entsprechend gemessenen Intensitäten. Zu einem Zeitpunkt t₂ wird, wie die Fig. 4b zeigt, in gleicher Weise ein weiteres Bildmuster 12b im Messbereich 8 aufgezeichnet.

Die Auswerteeinheit ermittelt dann, wie in Fig. 4c dargestellt ist, die Verschiebung der zweidimensionalen Koordinaten X, Y der entsprechenden Messsignale der aufeinanderfolgenden Bilder 12a, b. Diese Verschiebung ist ein Maß für die Bewegung der Hülle 3. Die berechnete Verschiebung wird zur weiteren Auswertung in orthogonale Komponenten zerlegt. In diesem Beispiel wären das zwei Schritte nach oben (z.B. durch die Drehbewegung der Hülle mit dem Füllrohr 2) und ein Schritt nach links (z.B. durch Abzug der Hülle 3 vom Füllrohr 2). Der Bewegungsvektor kann z.B. durch einen Algorithmus zweidimensionaler Kreuzkorrelation ermittelt werden. Ausgehend von dem Bild 12b, das zu einem Zeitpunkt t₂ aufgenommen wurde, wird dann weiter die Verschiebung des Bildmusters, d.h. der zweidimensionalen Koordinaten der entsprechenden Messsignale bei einer weiteren Messung zu einem Zeitpunkt t₃ ermittelt. Somit kann, wie aus Fig. 3 hervorgeht, die Bewegung, d.h. das Maß der Verschiebung, (d.h. die zwischen zwei Messungen zurückgelegte Strecke oder eine entsprechende Geschwindigkeit bzw. ein entsprechender Wert) in Abhängigkeit der Zeit dargestellt werden. Zur Beurteilung, ob ein Darmplatzer oder ein Hüllenende vorliegt, wird nur die Bewegung der Hülle 3 in Ausstoßrichtung zur Auswertung herangezogen. Die Drehung des Füllrohrs 2 bewirkt eine Bewegung der zu tastenden Hüllenfläche quer zu dieser Richtung. Durch die getrennte Erfassung der Bewegung in X- und Y-Richtung beeinflusst die Drehung des Rohres den Messwert, der ausgewertet wird nicht.

Solange sich eine Wursthülle auf dem Füllrohr befindet und durch den Füllvorgang abgezogen wird, wird, wie aus Fig. 3 deutlich wird, eine Bewegung durch Änderung der Bildmuster von der Auswerteeinheit 9 erkannt. Fällt die Bewegung unterhalb eines vorab bestimmten Schwellwertes, d.h. bewegt sich die Hülle 3 nur in geringem Maß oder gar nicht mehr in Ausstoßrichtung T, so erkennt die Auswerteeinheit 9 eine Störung und gibt ein entsprechendes Signal aus, das entweder eine Störung in der Vorrichtung optisch oder akustisch anzeigt und/oder gibt ein Signal an die Systemsteuerung der Vorrichtung 1, die wiederum den Füllvorgang stoppt, um eine Verschmutzung der Anlage zu verhindern. Kommt es nämlich zu einem Wurstplatzer der Hülle 3, so bewegt sich diese nicht weiter in Ausstoßrichtung T, so dass die Bewegung der Wursthülle 3 zum Erkennen eines Wursthüllenplatzers dient. Bei Wursthüllenende kommt es ebenfalls zu keiner Verschiebung der Bildmuster in Ausstoßrichtung T mehr. Der Schwellwert wird zweckmäßigerweise so festgelegt, dass er unter dem erwarteten Wert für eine ungestörte Bewegung liegt. Dadurch sollen Fehlerkennungen verhindert werden.

Wenn sich die Hüllenfläche zwischen zwei Aufnahmen soweit bewegt, dass keine Übereinstimmung mehr zwischen den Bildmustern erkannt werden kann, ist keine Aussage mehr über die Bewegung bzw. die Geschwindigkeit mehr möglich. Daher muss die Zeit zwischen den Aufnahmen t₁, t₂, die abgetastete Hüllenfläche, die Auflösung des optischen Sensors 7, die Beschaffenheit der Oberfläche und die Transportgeschwindigkeit aufeinander abgestimmt werden.

Die Bildauswertung, wie sie in Zusammenhang mit den Fig. 4a bis c beschrieben wurde, ist nur ein Beispiel, die Bewegung der Bildmuster auszuwerten.

Es besteht auch beispielsweise die Möglichkeit, dass bei in zeitlicher Abfolge aufgenommenen Bildern 12a, b die Auswerteeinheit zeitlich wiederkehrende Muster bzw. entsprechende Messwerte an bestimmten X, Y Koordinaten erkennt und ein entsprechendes Frequenzspektrum, z.B. durch Fourieranalyse auswertet. Zeitlich wiederkehrende Muster ergeben sich beispielsweise durch die Raffung der Hülle. Über die Frequenz zeitlich wiederkehrender Signale lässt sich auch eine Aussage über die Bewegung, d.h. Geschwindigkeit der Hülle machen, die ja wiederum ein Maß für das Vorhandensein von Hüllenplatzern bzw. Hüllenenden ist.

Es ist auch möglich, ein aufgezeichnetes Bildmuster 12a mit vorab gespeicherten Bildmustern zu vergleichen, was erlaubt, dass bestimmt werden kann, ob das Bildmuster einem bestimmten Hüllenmaterial entspricht. Somit kann über das Bildmuster eine Aussage über die Art der abgetasteten Oberfläche abgeleitet werden.

## Patentansprüche

1. Vorrichtung (1) zum Befüllen einer Hülle (3) mit pastösem Füllgut, insbesondere zum Befüllen einer Wursthülle mit Wurstbrät, mit einem Füllrohr (2), das das Füllgut in die Hülle (3) ausstößt und mit einer Sensoreinrichtung (7, 9) zum Erkennen von Hüllenplatzem und/oder einem Hüllenende, **dadurch gekennzeichnet, dass**
die Sensoreinrichtung (7, 9) einen optischen Sensor (7) umfasst, der in zeitlicher Abfolge Bilder (12) der Hülle (3) aufzeichnet und durch
eine Auswerteeinheit (9), die die Bilder (12) dahingehend auswertet, ob ein Wursthüllenplatzer und/oder ein Wursthüllenende vorliegt und ein entsprechendes Fehlersignal ausgibt,
wobei die Sensoreinrichtung (7, 9) ein Bewegungssensor ist, und die Auswerteeinheit (9) das Fehlersignal ausgibt, wenn sich die Hülle (3) nicht mehr in Ausstoßrichtung und/oder senkrecht zur Ausstoßrichtung bewegt, oder die Bewegung der Hülle pro Zeit in Ausstoßrichtung und/oder senkrecht zur Ausstoßrichtung unterhalb eines bestimmten Schwellwerts fällt.

2. Vorrichtung nach Anspruch 1 **dadurch gekennzeichnet, dass** der optische Sensor (7) eine Anordnung von lichtempfindlichen Zellen umfasst, die zeitabhängig die Intensität des von der Hülle reflektierten Lichts erfassen.

3. Vorrichtung nach mindestens einem der Ansprüche 1 bis 2, **dadurch gekennzeichnet, dass** der optische Sensor (7) derart beschaffen ist, dass er zu den von den lichtempfindlichen Zellen erfassten Intensitäten proportionale Messsignale an die Auswerteeinheit (9) leitet, die eine Verschiebung der zweidimensionalen Koordinaten (X, Y) der entsprechenden Messsignale bei zeitlich aufeinanderfolgenden Bildern erfasst, wobei die Verschiebung ein Maß für die Bewegung der Hülle (3) ist.

4. Vorrichtung nach Anspruch 3, **dadurch gekennzeichnet, dass** die Auswerteeinheit (9) das Fehlersignal ausgibt, wenn die Verschiebung der Messsignale in Ausstoßrichtung und/oder senkrecht zur Ausstoßrichtung unterhalb eines vorbestimmten Schwellwertes liegt, oder keine Verschiebung vorliegt.

5. Vorrichtung nach mindestens einem der vorhergehenden Ansprüche, **dadurch gekennzeichnet, dass** die Vorrichtung weiter eine Lichtquelle (5) umfasst, die derart angeordnet ist, so dass zumindest die von dem Sensor (7) erfasst Fläche (8) der Hülle (3) gleichmäßig beleuchtet wird.

6. Vorrichtung nach Anspruch 5, **dadurch gekennzeichnet, dass** die Lichtquelle (5) diffuses Licht emittiert.

7. Vorrichtung nach Anspruch 5 oder 6, **dadurch gekennzeichnet, dass** die Lichtquelle (5) ringförmig oder als Ringsegment ausgebildet ist.

8. Vorrichtung nach mindestens einem der Ansprüche 1 bis 7, **dadurch gekennzeichnet, dass** der optische Sensor (7) derart angeordnet ist, dass die Hülle (3) auf dem Füllrohr (2) in Ausstoßrichtung vor einer Darmbremse (4) und/oder nach der Darmbremse (4) optisch abgetastet wird und/oder die bereits gefüllte Wursthülle (3a) optisch abgetastet wird.

9. Vorrichtung nach mindestens einem der vorherigen Ansprüche, **dadurch gekennzeichnet, dass** die Vorrichtung weiter eine Systemsteuerung umfasst, die den Füllvorgang stoppt, wenn sie das Fehlersignal verhält.

10. Vorrichtung nach mindestens einem der vorherigen Patentansprüche, **dadurch gekennzeichnet, dass** zwischen Füllrohr (2) und optischem Sensor (7) eine Linsenoptik (10) vorgesehen ist.

11. Verfahren zum Befüllen einer Hülle (3) mit pastösem Gut, insbesondere zum Befüllen einer Wursthülle (3) mit Wurstbrät, wobei Füllgut über ein Füllrohr (2) in die Hülle (3) ausgestoßen wird und Hüllenplatzer und/oder Hüllenenden erkannt werden, **gekennzeichnet durch**:
- Aufzeichnen von Bildern der Hülle (3) in zeitlicher Abfolge **durch** einen optischen Sensor (7), und
- Auswerten der Bilder (12) und Ausgeben eines Fehlersignals, wenn die Auswertung einen Wursthüllenplatzer und/oder Wursthüllenende ergibt, wobei
- bei der Auswertung bei zeitlich aufeinanderfolgenden Bildern (12a, b) bestimmt wird, ob sich die Hülle (3) in Ausstoßrichtung und/oder senkrecht zur Ausstoßrichtung bewegt und ein Fehlersignal dann ausgegeben wird, wenn sich die Hülle nicht in Ausstoßrichtung und/oder senkrecht zur Ausstoßrichtung bewegt oder die Bewegung pro Zeit der Hülle in Ausstoßrichtung und/oder senkrecht zur Ausstoßrichtung unter einen bestimmten Schwellwert fällt.

12. Verfahren nach Anspruch 11, **dadurch gekennzeichnet, dass** die Bilder (12a, b) durch zeitabhängiges Erfassen der Intensität des von der Hülle reflektierten Lichts durch entsprechende lichtempfindliche Zellen aufgezeichnet werden.

13. Verfahren nach Anspruch 12, **dadurch gekennzeichnet, dass** der optische Sensor (7) zu den erfassten Intensitäten proportionale Messsignale an eine Auswerteeinheit (9) leitet, die eine Verschiebung der zweidimensionalen Koordinaten (X, Y) der entsprechenden Messsignale bei zeitlich aufeinanderfolgenden Bildern ermittelt, wobei die Verschiebung ein Maß für die Bewegung der Hülle (3) ist.

14. Verfahren nach Anspruch 13, **dadurch gekennzeichnet, dass** von der Auswerteeinheit (9) dann ein Fehlersignal ausgegeben wird, wenn die Verschiebung der Messsignale in Ausstoßrichtung und/oder senkrecht zur Ausstoßrichtung unterhalb eines bestimmten Schwellwertes liegt oder keine Verschiebung vorliegt.

15. Verfahren nach mindestens einem der Ansprüche 11 bis 14, **dadurch gekennzeichnet, dass** die von dem optischen Sensor (7) erfasste Hüllenfläche gleichmäßig beleuchtet wird.

16. Verfahren nach Anspruch 15, **dadurch gekennzeichnet, dass** die von dem Sensor (7) erfasst Hüllenfläche (8) mit diffusem Licht beleuchtet wird.

17. Verfahren nach einem der Ansprüche 11 bis 16, **dadurch gekennzeichnet, dass** die Hülle (3) auf dem Füllrohr (2) in Ausstoßrichtung vor und/oder nach einer Darmbremse (4) und/oder die gefüllte Hülle optisch abgetastet wird.

18. Verfahren nach einem der Ansprüche 11 bis 17, **dadurch gekennzeichnet, dass** der Füllvorgang gestoppt wird, wenn das Fehlersignal ausgegeben wird.

19. Verfahren nach Anspruch 11, **dadurch gekennzeichnet, dass** bestimmt wird, ob ein aufgezeichnetes Bildmuster einem gespeicherten Bildmuster entspricht.

20. Verfahren nach Anspruch 11, **dadurch gekennzeichnet, dass** der optische Sensor zu den erfassten Intensitäten proportionale Messsignale an die Auswerteeinheit (9) leitet, die wiederum für zeitlich wiederkehrende Messwerte ein Frequenzspektrum auswertet.

## Claims

1. Apparatus (1) for filling a casing (3) with pasty filling, in particular for filling a sausage casing with sausage meat, having a filling tube (2) which expels the filling into the casing (3), and having a sensor device (7, 9) for detecting bursting of the casing and/or an end of the casing, **characterised**
**in that** the sensor device (7, 9) includes an optical sensor (7) which records images (12) of the casing (3) in time sequence, and
by an evaluating unit (9) which evaluates the images (12) to see whether there is bursting of a sausage casing and/or a sausage casing end and emits a corresponding error signal,
the sensor device (7, 9) being a movement sensor, and the evaluating unit (9) emitting the error signal when the casing (3) no longer moves in the direction of expulsion and/or perpendicularly to the direction of expulsion, or the movement of the casing per unit time in the direction of expulsion and/or perpendicularly to the direction of expulsion falls below a given threshold value.

2. Apparatus according to claim 1, **characterised in that** the optical sensor (7) includes an assembly of light-sensitive cells which detect the intensity of the light reflected by the casing as a function of time.

3. Apparatus according to one or more of claims 1 to 2, **characterised in that** the optical sensor (7) is such that it passes measurement signals proportional to the intensities detected by the light-sensitive cells, to the evaluating unit (9) which detects a displacement of the two-dimensional coordinates (X, Y) of the corresponding measurement signals in the case of images succeeding each other in time, the displacement being a measure of the movement of the casing (3).

4. Apparatus according to claim 3, **characterised in that** the evaluating unit (9) emits the error signal when the displacement of the measurement signals in the direction of expulsion and/or perpendicularly to the direction of expulsion is below a predetermined threshold value, or there is no displacement.

5. Apparatus according to one or more of the preceding claims, **characterised in that** the apparatus further includes a light source (5) which is arranged so that at least the surface (8) of the casing (3) detected by the sensor (7) is illuminated evenly.

6. Apparatus according to claim 5, **characterised in that** the light source (5) emits diffuse light.

7. Apparatus according to claim 5 or 6, **characterised in that** the light source (5) is ring-shaped or designed as a ring segment.

8. Apparatus according to one or more of claims 1 to 7, **characterised in that** the optical sensor (7) is arranged in such a way that the casing (3) on the filling tube (2) in front of a casing brake (4) and/or behind the casing brake (4) in the direction of expulsion is scanned optically and/or the already filled sausage casing (3a) is scanned optically.

9. Apparatus according to one or more of the preceding claims, **characterised in that** the apparatus further includes a system control means which stops the filling operation when it receives the error signal.

10. Apparatus according to one or more of the preceding claims, **characterised in that** between filling tube (2) and optical sensor (7) is provided a lens (10).

11. Method for filling a casing (3) with pasty filling, in particular for filling a sausage casing (3) with sausage meat, filling being expelled via a filling tube (2) into the casing (3), and bursting of the casing and/or ends of the casing being detected, **characterised by**
recording of images of the casing (3) in time sequence by an optical sensor (7), and
evaluation of the images (12) and emission of an error signal when evaluation shows bursting of the sausage casing and/or a sausage casing end,
wherein during evaluation with images (12a, b) succeeding each other in time it is determined whether the casing (3) is moving in the direction of expulsion and/or perpendicularly to the direction of expulsion, and an error signal is emitted when the casing is not moving in the direction of expulsion and/or perpendicularly to the direction of expulsion or the movement per unit time of the casing in the direction of expulsion and/or perpendicularly to the direction of expulsion falls below a given threshold value.

12. Method according to claim 11, **characterised in that** the images (12a, b) are recorded by time-dependent detection of the intensity of the light reflected by the casing by corresponding light-sensitive cells.

13. Method according to claim 12, **characterised in that** the optical sensor (7) passes measurement signals proportional to the intensities detected, to an evaluating unit (9) which detects a displacement of the two-dimensional coordinates (X, Y) of the corresponding measurement signals in the case of images succeeding each other in time, the displacement being a measure of the movement of the casing (3).

14. Method according to claim 13, **characterised in that** an error signal is emitted by the evaluating unit (9) when the displacement of the measurement signals in the direction of expulsion and/or perpendicularly to the direction of expulsion is below a predetermined threshold value, or there is no displacement.

15. Method according to one or more of claims 11 to 14, **characterised in that** the surface of the casing detected by the optical sensor (7) is illuminated evenly.

16. Method according to claim 15, **characterised in that** the casing surface (8) detected by the sensor (7) is illuminated with diffuse light.

17. Method according to any of claims 11 to 16, **characterised in that** the casing (3) on the filling tube (2) in front of and/or behind a casing brake (4) in the direction of expulsion and/or the filled casing is scanned optically.

18. Method according to any of claims 11 to 17, **characterised in that** the filling operation is stopped when the error signal is emitted.

19. Method according to claim 11, **characterised in that** it is determined whether a recorded image pattern corresponds to a stored image pattern.

20. Method according to claim 11, **characterised in that** the optical sensor passes measurement signals proportional to the intensities detected, to the evaluating unit (9) which in turn evaluates a frequency spectrum for measured values recurring in time.

## Revendications

1. Dispositif (1) destiné au remplissage d'un boyau (3) par du produit pâteux, en particulier au remplissage d'un boyau de saucisse par de la chair à saucisse, comprenant un tube de remplissage (2), qui éjecte le produit dans le boyau (3), et un dispositif de détection (7, 9) pour détecter des éclatements du boyau et/ou une fin de boyau,
**caractérisé en ce que**
le dispositif de détection (7, 9) comprend un capteur optique (7), qui enregistre successivement dans le temps des images (12) du boyau (3) et par
une unité d'évaluation (9), qui évalue les images (12) dans le sens de la présence éventuelle d'un éclatement du boyau de saucisse et/ou d'une fin du boyau de saucisse et émet un signal de défaut correspondant,
le dispositif de détection (7, 9) étant un capteur de déplacement et l'unité d'évaluation (9) émettant le signal de défaut, lorsque le boyau (3) ne se déplace plus dans la direction d'éjection et/ou perpendiculairement à la direction d'éjection, ou que le déplacement du boyau par unité de temps tombe dans la direction d'éjection et/ou perpendiculairement à la direction d'éjection au-dessous d'une valeur de seuil définie.

2. Dispositif suivant la revendication 1, **caractérisé en ce que** le capteur optique (7) comprend un agencement de cellules photosensibles, qui détectent en fonction du temps l'intensité de la lumière réfléchie par le boyau.

3. Dispositif suivant l'une au moins des revendications 1 à 2, **caractérisé en ce que** le capteur optique (7) est structuré de telle sorte qu'il envoie à l'unité d'évaluation (9) des signaux de mesure proportionnels aux intensités détectées par les cellules photosensibles, laquelle unité d'évaluation détecte un décalage des coordonnées bidimensionnelles (X, Y) des signaux de mesure correspondants pour des images successives dans le temps, le décalage étant une mesure du déplacement du boyau (3).

4. Dispositif suivant la revendication 3, **caractérisé en ce que** l'unité d'évaluation (9) émet le signal de défaut, lorsque le décalage des signaux de mesure dans la direction d'éjection et/ou perpendiculairement à la direction d'éjection se situe au-dessous d'une valeur de seuil prédéfinie, ou qu'aucun décalage n'est présent.

5. Dispositif suivant l'une au moins des revendications précédentes, **caractérisé en ce que** le dispositif comprend en outre une source lumineuse (5), qui est agencée de telle sorte qu'au moins la surface (8) du boyau (3), détectée par le capteur (7), est éclairée régulièrement.

6. Dispositif suivant la revendication 5, **caractérisé en ce que** la source lumineuse (5) émet de la lumière diffuse.

7. Dispositif suivant l'une des revendications 5 et 6, **caractérisé en ce que** la source lumineuse (5) est configurée en forme d'anneau ou de segment annulaire.

8. Dispositif suivant l'une au moins des revendications 1 à 7, **caractérisé en ce que** le capteur optique (7) est agencé de telle sorte que le boyau (3) sur le tube de remplissage (2) est détecté optiquement dans la direction d'éjection en amont d'un frein de boyau (4) et/ou en aval du frein de boyau (4) et/ou que le boyau de saucisse (3a) déjà rempli est détecté optiquement.

9. Dispositif suivant l'une au moins des revendications précédentes, **caractérisé en ce que** le dispositif comprend en outre une commande de système, qui stoppe l'opération de remplissage lorsqu'elle reçoit le signal de défaut.

10. dispositif suivant l'une au moins des revendications précédentes, **caractérisé en ce qu'**une optique lenticulaire (10) est prévue entre le tube de remplissage (2) et le détecteur optique (7).

11. procédé de remplissage d'un boyau (3) par du produit pâteux, en particulier de remplissage d' un boyau de saucisse (3) par de la chair à saucisse, dans lequel du produit est éjecté dans le boyau (3) au travers d'un tube de remplissage (2) et des éclatements du boyau et/ou des fins de boyau sont détectés, **caractérisé par** :
- l'enregistrement d'images du boyau (3) successivement dans le temps par un capteur optique (7), et
- l'évaluation des images (12) et l'émission d'un signal de défaut, lorsque l'évaluation fournit un éclatement du boyau de saucisse et/ou une fin du boyau de saucisse, procédé dans lequel
- lors de l'évaluation, il est déterminé pour des images (12a, b) successives dans le temps si le boyau (3) se déplace dans la direction d'éjection et/ou perpendiculairement à la direction d'éjection et un signal de défaut est émis lorsque le boyau ne se déplace pas dans la direction d'éjection et/ou perpendiculairement à la direction d'éjection ou que le déplacement par unité de temps du boyau tombe dans la direction d'éjection et/ou perpendiculairement à la direction d'éjection au-dessous d'une valeur de seuil définie.

12. Procédé suivant la revendication 11, **caractérisé en ce que** les images (12a, b) sont enregistrées par détection en fonction du temps de l'intensité de la lumière, réfléchie par le boyau, par des cellules photosensibles appropriées.

13. Procédé suivant la revendication 12, **caractérisé en ce que** le capteur optique (7) envoie à une unité d'évaluation (9) des signaux de mesure proportionnels aux intensités détectées, laquelle unité d'évaluation détermine un décalage des coordonnées bidimensionnelles (X, Y) des signaux de mesure correspondants pour des images successives dans le temps, le décalage étant une mesure du déplacement du boyau (3).

14. procédé suivant la revendication 13, **caractérisé en ce qu'**un signal de défaut est émis par l'unité d'évaluation (9) lorsque le décalage des signaux de mesure dans la direction d'éjection et/ou perpendiculairement à la direction d'éjection se situe au-dessous d'une valeur de seuil définie ou qu'aucun décalage n'est présent.

15. Procédé suivant l'une au moins des revendications 11 à 14, **caractérisé en ce que** la surface du boyau, détectée par le capteur optique (7), est éclairée régulièrement.

16. Procédé suivant la revendication 15, **caractérisé en ce que** la surface (8) du boyau, détectée par le capteur (7), est éclairée par de la lumière diffuse.

17. Procédé suivant l'une des revendications 11 à 16, **caractérisé en ce que** le boyau (3) sur le tube de remplissage (2) est détecté optiquement dans la direction d'éjection en amont et/ou en aval d'un frein de boyau (4) et/ou le boyau rempli est détecté optiquement.

18. Procédé suivant l'une des revendications 11 à 17, **caractérisé en ce que** l'opération de remplissage est stoppée lorsque le signal de défaut est émis.

19. procédé suivant la revendication 11, **caractérisé en ce qu'**il est déterminé si un modèle d'image enregistré correspond à un modèle d'image mémorisé.

20. Procédé suivant la revendication 11, **caractérisé en ce que** le capteur optique envoie à l'unité d'évaluation (9) des signaux de mesure proportionnels aux intensités détectées, laquelle unité d'évaluation évalue pour sa part un spectre de fréquences pour des valeurs de mesure récurrentes dans le temps.
